**Europäisches Patentamt**

**European Patent Office**

**Office européen des brevets**

(19)

(11) Veröffentlichungsnummer : **0 307 510 B1**

(12) **EUROPÄISCHE PATENTSCHRIFT**

(45) Veröffentlichungstag der Patentschrift :
06.02.91 Patentblatt 91/06

(51) Int. Cl.$^5$ : **A01N 65/00**

(21) Anmeldenummer : **87116137.8**

(22) Anmeldetag : **03.11.87**

(54) **Verfahren zur Bekämpfung von Pilzen.**

(30) Priorität : **17.09.87 DE 3731239**

(43) Veröffentlichungstag der Anmeldung :
**22.03.89 Patentblatt 89/12**

(45) Bekanntmachung des Hinweises auf die
Patenterteilung :
**06.02.91 Patentblatt 91/06**

(84) Benannte Vertragsstaaten :
**AT BE CH DE ES FR GB GR IT LI NL SE**

(56) Entgegenhaltungen :
**J. PHARM. SOC. KOREA, Band 27, Nr. 1, 1983,
Seiten 37-43, Yakhak Hoeji, Korea; CHI et al.:
"Anthraquinones from the rhizome of
Polygonum sachalinensis"**

(73) Patentinhaber : **BASF Aktiengesellschaft
Carl-Bosch-Strasse 38
D-6700 Ludwigshafen (DE)**

(72) Erfinder : **Pommer, Ernst-Henrich, Dr.
Berliner Platz 7
D-6703 Limburgerhof (DE)**
Erfinder : **Scherer, Maria
Hermann-Juergens-Strasse 30
D-6741 Godramstein (DE)**
Erfinder : **Klingauf, Fred, Prof. Dr.
Heinrichstrasse 243
D-6100 Darmstadt (DE)**
Erfinder : **Herger, Gabriele
Schulstrasse 11
D-6100 Darmstadt (DE)**

## Beschreibung

Die vorliegende Erfindung betrifft ein Verfahren zur Bekämpfung von Pilzen in der Landwirtschaft, indem man die Pflanze Reynoutria sachalinensis verwendet.

Es ist bekannt, das Rhizom von Reynoutria sachalinensis Nakai (= Polygonum sachalinense) aus der Familie der Polygonaceae als Abführmittel, Diuretikum und zur Behandlung von eitrigen Hauterkrankungen, Gonorrhoe sowie athlete's foot (Chi et al, Yakhak Hoeji 27, Nr. 1, S. 37, 1983) zu verwenden und aus dem getrockneten Rhizom dieser Pflanze Stilbenderivate mit antibakterieller und fungizider Wirkung zu isolieren. Es ist außerdem bekannt, daß Reynoutria sachalinensis in den gemäßigten Klimazonen gute Wachstumsbedingungen vorfindet, so daß die Massenproduktion dieses Naturprodukts ohne Schwierigkeiten möglich ist.

Es wurden nun gefunden, daß die Pflanze Reynoutria sachalinensis zur Bekämpfung von Pilzen in der Landwirtschaft gut geeignet ist. Unter der Pflanze ist sowohl die Pflanze selbst auch Pflanzenteile z.B. Rhizom, Stengel oder Blätter oder ihre Mischung zu verstehen. Vorzugsweise wird die tote Pflanze, insbesondere die getrocknete Pflanze verwendet. Besonders vorteilhaft ist die Verwendung der getrockneten Pflanze in feinteiliger Form, z.B. als Granulat, Pulver oder Puder. Insbesondere die Verwendung der getrockneten Blätter in feinteiliger Form wird bevorzugt.

Anwendungsfähige Aufbereitungen von Reynoutria sachalinensis können auf verschiedene Weise hergestellt werden. Z.B. werden Blätter oder Rhizomteile an der Luft oder unter Wärmeeinwirkung schonend getrocknet und anschließend pulverisiert. Das Pulver kann beispielsweise mit einem organischen Lösungsmittel z.B. mit Ethanol extrahiert und nach teilweisem Abdampfen des Ethanols ein Extrakt gewonnen werden, der z.B. nach Zusatz eines Emulgators mit Wasser eine Spritzbrühe ergibt. Es können auch wäßrige Auszüge aus dem Pulver hergestellt werden.

Herstellungsbeispiele

A Eine Mischung (Spritzpulver), die zur Herstellung einer wäßrigen Spritzflüssigkeit geeignet ist, kann z.B hergestellt werden durch Mischen von 80 Gewichtsteilen des Pflanzenpulvers mit 10 Gewichtsteilen des Natriumsalzes einer Ligninsulfonsäure aus einer Sulfitablauge, mit 3 Gewichtsteilen des Natriumsalzes der Diisobutyl-naphthalin-alpha-sulfonsäure und mit 7 Gewichtsteilen eines pulverförmigen Kieselsäuregels. Die Mischung wird z.B. in einer Hammermühle vermahlen. Durch feines Verteilen der Mischung in Wasser erhält man eine Spritzbrühe.

B Für einen Alkoholextrakt werden 100 g frisches Pflanzenmaterial grob zerkleinert und mit 750 ml Ethanol 4 Stunden in einer Extraktions-Apparatur extrahiert. Der so gewonnene Rohextrakt wird im Rotationsverdampfer bis zur Trockene eingeengt. Nach Zugabe einer kleinen Menge Aceton, eines Emulgators und anschließendem Verdünnen mit Wasser erhält man eine Spritzbrühe.

C Für einen Kaltwasserauszug werden 10 g Pflanzenpulver mit 1000 cm³ Wasser gemischt, 24 Stunden stehen lassen, wobei die Mischung mehrmals aufgerührt wird. Danach werden die festen Bestandteile abgetrennt (z.B. filtriert) und die Flüssigkeit als Spritzbrühe verwendet.

Die Pflanze Reynoutria sachalinensis hat eine gut fungizide Wirkung auf Pilze, die in der Landwirtschaft Schäden verursachen.

Besonders interessant ist die Anwendung von Reynoutria sachalinensis zur Bekämpfung von echten Mehltaupilzen, beispielsweise von Gurkengewächsen, Zierpflanzen oder Gemüsekulteren, von Botrytis cinerea an Unterglaskulturen, wie Geranien, Cyclamen, Gurken und Paprika sowie Rostpilzen an Zierpflanzen.

Die gute Pflanzenverträglichkeit der Pflanze Reynoutria sachalinensis und ihrer Wirkstoffe in den zur Bekämpfung von Pflanzenkrankheiten notwendigen Konzentrationen erlaubt eine Behandlung von oberirdischen Pflanzenteilen.

Die Pflanze kann in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in ULV-Kalt- und Warmnebel-Formulierungen.

Diese Formulierungen werden in bekannter Weise hergestellt, z.B. durch Vermischen der Pflanze mit Streckmitteln, flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage : Aromaten oder chlorierte aliphatische Kohlenwasserstoffe, wie Chlorbenzhole, Chlorethylene oder Methylenchlorid, aliphatische Kohlenwasserstoffe, wie Cyclohexan oder Parafine, z.B. Erdölfraktionen, Alkohole, wie Methanol, Ethanol, Isopropanol, Butanol oder Glycol sowie deren Ether und Ester, Ketone, wie Aceton, Methylethylketon, Methylisobutylketon oder Cyclohexanon, starke polare Lösungsmittel, wie Dimethylformamid und Dimethylsulfoxid, sowie Wasser ; mit verflüssigten gasförmigen Streckmitteln oder Trägerstoffen sind solche Flüssigkeiten gemient, welche bei normaler Temperatur und unter Normaldruck gasförmig sind, z.B. Aerosol-Treibgase, wie Halogenkohlenwasserstoffe sowie Butan, Propan, Stickstoff und Kohlendioxid ; als feste Trägerstoffe kommen in Frage : z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage : z.B. gebrochene und fraktionierte natürliche Gesteine wie Calcit, Marmor, Bims, Sepiolith, Dolomit sowie synthetische Granulate aus organischem Material, wie Sägemehl, Kokosnußschalen Maiskolben und Tabakstengeln ; als oberflächenaktive Mittel z.B. Emulgier-und/oder schaumerzeugende Mittel kommen in Frage : z.B. nichtionogene und anionische Emulgatoren, wie Polyoxyethylen-Fettsäureester, Polyoxyethylen-Fettalkohol-ether, z.B. Alkylarylpolyglykolether, Alkylsulfonate, Alkylsulfate, Arylsulfonate sowie Eiweißhydrolysate ; als Dispergiermittel kommen in Frage : z.B. Lignin-Sulfitablaugen und Methylcellulose. Die oberflächenaktiven Mittel werden beispielsweise in Mengen von 0,1 bis 30% (Gew.%), berechnet auf die Gesamtmenge des fungiziden Mittels, verwendet.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanbloau und organische Farbstoffe, wie Alizarin-, Azo-, Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.% der Pflanzen oder Pflanzenextrakt, vorzugsweise zwischen 0,5 und 90%.

Die Pflanze kann in den Formulierungen oder in den verschiedenen Anwendungsformen in Mischung mit anderen bekannten Wirkstoffen vorliegen, wie Bakteriziden, Insektiziden, Akariziden, Nematiziden, Herbiziden, Schutzstoffen gegen Vogelfraß, Wuchsstoffen, Pflanzennährstoffen, Bodenstrukturverbesserungsmitteln und Fungiziden, z.B. Schwefel (Netzschwefel), Natriumbikarbonat ($NaHCO_3$), Lecithin.

Die Pflanze kann als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Gießen, Tauchen, Spritzen, Sprühen, Vernebeln, Verdampfen, Injizieren, Verschlämmen, Verstreichen, Stäuben oder Streuen.

Bei der Behandlung von Pflanzenteilen können die Pflanzenkonzentrationen in den Anwendungsformen in einem größeren Bereich variiert werden. Sie liegen im allgemeinen zwischen 2 und 0,1 Gew.%, vorzugsweise zwischen 1 und 0,5%.

Die Aufwandmengen liegen je nach Art des gewünschten Effekts zwischen 2 und 20 kg der Pflanze je ha. Die folgenden Anwendungsbeispiele erläutern die gute fungizide Wirkung der Pflanze.

Anwendungsbeispiel 1

Wirksamkeit gegen Plasmopara viticola

Blätter von Topfreben der Sorte "Müller Thurgau" wurden mit wäßrigen Spritzbrühen besprüht. Um die Wrikungsdauer der Wirkstoffe beurteilen zu können, wurden die Pflanzen nach dem Antrocknen der Spritzbeläge 8 Tage im Gewächshaus aufgestellt. Erst dann wurden die Blätter mit einer Zoosporenaufschwemmung von Plasmopara viticola (Rebenperonospora) infiziert. Danach wurden die Reben zunächst für 48 Stunden in einer wasserdampfgesättigten Kammer bei 24°C und anschließend für 5 Tage in einem Gewächshaus mit Temperaturen zwischen 20 und 30°C aufgestellt. Nach dieser Zeit wurden die Pflanzen zur Beschleunigung des Sporangienträgerausbruches abermals für 16 Stunden in der feuchten Kammer aufgestellt. Dann erfolgte die Beurteilung des Ausmaßes des Pilzausbruches auf den Blattunterseiten.

Bewertung durch Angabe der befallenen Blattfläche in % der Gesamtblattfläche

| Art der Aufbereitung der Pflanze | ...% Blattbefall nach Behandlung mit 1%igen Pflanzenpulveraufbereitungen (Gew.%) |
|---|---|
| Spritzpulver | 16 |
| Alkoholextrakt | 7 |
| Kaltwasserauszug (24 Stunden) | 8 |
| Befall in der unbehandelten Kontrolle: | 86 |

Anwendungsbeispiel 2

Wirksamkeit gegen Weizenmehltau

Blätter von in Töpfen gewachsenen Weizenkeimlingen der Sorte "Frühgold" wurden mit wäßrigen Spritzbrühen besprüht und 24 Stunden nach dem Antrocknen des Spritzbelages mit Oidien (Sporen) des Weizenmehltaus (Erysiphe graminis var. tritici) bestäubt. Die Versuchspflanzen wurden anschließend im Gewächshaus bei Temperaturen zwischen 20 und 22°C und 75 bis 80% relativer Luftfeuchtigkeit aufgestellt. Nach 7 Tagen wurde das Ausmaß der Mehltauentwicklung ermittelt.
Bewertung durch Angabe der befallenen Blattfläche in % der Gesamtblattfläche

| Art der Aufbereitung der Pflanze | ...% Blattbefall nach Behandlung mit 1%igen Pflanzenpulveraufbereitungen (Gew.%) |
|---|---|
| Spritzpulver | 8 |
| Alkoholextrakt | 12 |
| Kaltwasserauszug (24 Stunden) | 25 |
| Befall in der unbehandelten Kontrolle: | 81 |

Anwendungsbeispiel 3

Wirksamkeit gegen Gurkenmehltau

Junge Gurkenpflanzen der Sorte "Chinesische Schlange" wurden im Zweiblattstadium mit einer wäßrigen Konidiensuspension des Gurkenmehltaus (Eryisphe cichoracearum und Sphaerotheca fuliginea) besprüht. Am nächsten Tag wurden diese Pflanzen mit wäßrigen Spritzbrühen bis zur Tropfnäßebesprüht und im Gewächshaus bei Temperaturen zwischen 20 und 22°C und 70-80% Luftfeuchtigkeit aufgestellt. 21 Tage nach der Wirkstoffapplikation wurde das Ausmaß des Pilzbefalls ermittelt.
Bewertung durch Angabe der befallenen Blattfläche in % der Gesamtblattfläche

| Art der Aufbereitung der Pflanze | ...% Blattbefall nach Behandlung mit 1%igen Pflanzenpulveraufbereitungen (Gew.%) |
|---|---|
| Spritzpulver | 8 |
| Alkoholextrakt | 0,7 |
| Kaltwasserauszug (24 Stunden) | 7 |
| Befall in der unbehandelten Kontrolle: | 70 |

Anwendungsbeispiel 4

Wirksamkeit gegen Botrytis cinerea an Paprika

Paprikasämlinge der Sorte "Neusiedler Ideal Elite" wurden, nachdem sich 4 - 5 Blätter gut entwickelt hatten, mit wäßrigen Spritzbrühen tropfnaß gespritzt. Nach dem Antrocknen des Spritzbelages wurden die Pflanzen mit einer Konidienaufschwemmung des Pilzes Botrytis cinerea besprüht und bei 22-24°C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedeckten.

Bewertung durch Angabe der befallenen Blattfläche in % der Gesamtblattfläche

| Art der Aufbereitung der Pflanze | ...% Blattbefall nach Behandlung mit 1%igen Pflanzenpulveraufbereitungen (Gew.%) |
|---|---|
| Spritzpulver | 18 |
| Alkoholextrakt | 42 |
| Kaltwasserauszug (24 Stunden) | 10 |
| Befall in der unbehandelten Kontrolle: | 70 |

Anwendungsbeispiel 5

Wirksamkeit gegen Bohnenrost

Blätter von in Töpfen gewachsenen Bohnenpflanzen der Sorte "Fogi" wurden mit Sporen des Bohnenrostes Uromyces appendiculatus künstlich infiziert und 24 Stunden lang bei 22-24°C in einer wasserdampfgesättigten Kammer aufgestellt. Danach wurden die Pflanzen mit wäßrigen Spritzbrühen bis zur Tropfnäße besprüht und im Gewächshaus bei Temperaturen zwischen 22 und 25°C und bei 70 bis 80% relativer Luftfeuchtigkeit belassen. Nach 8 Tagen wurde das Ausmaß der Rostpilzentwicklung beurteilt.

Bewertung durch Angabe der befallenen Blattfläche in % der Gesamtoberfläche

| Art der Aufbereitung der Pflanze | ...% Blattbefall nach Behandlung mit 1%igen Pflanzenpulveraufbereitungen (Gew.%) |
|---|---|
| Spritzpulver | 10 |
| Alkoholextrakt | 10 |
| Kaltwasserauszug (24 Stunden) | 10 |

Befall in der unbehandelten Kontrolle: 90

## Ansprüche

1. Verwendung der Pflanze Reynoutria sachalinensis zur Bekämpfung von Pilzen in der Landwirtschaft.

2. Fungizides Mittel für die Landwirtschaft, enthaltend die Pflanze Reynoutria sachalinensis, einen festen inerten Trägerstoff und ein oberflächenaktives Mittel.

3. Verwendung nach Anspruch 1, dadurch gekennzeichnet, daß man die getrocknete Pflanze verwendet.

4. Verwendung nach Anspruch 1, dadurch gekennzeichnet, daß man die getrocknete Pflanze in feinteiliger Form verwendet.

5. Verwendung nach Anspruch 1, dadurch gekennzeichnet, daß man die getrockneten Blätter der Pflanze in feinteiliger Form verwendet.

6. Verfahren zur Bekämpfung von Pilzen in der Landwirtschaft, dadurch gekennzeichnet, daß man die Pilze oder die vor Pilzbefall zu schützenden Pflanzenteile behandelt mit einer fungizid wirksamen Menge der Pflanze Reynoutria sachalinensis.

7. Fungizides Mittel für die Landwirtschaft, enthaltend die getrockneten Blätter der pflanze von Reynoutria sachalinensis in feinteiliger Form.

8. Spritzbrühe, enthaltend Wasser und die getrockneten Blätter der Pflanze Reynoutria sachalinensis in feinteiliger Form.

## Claims

1. Use of the plant Reynoutria sachalinensis for controlling fungi in agriculture.

2. A fungicide for agriculture, containing the plant Reynoutria sachalinensis, a solid inert carrier and a surfactant.

3. Use as claimed in claim 1, wherein the dried plant is used.

4. Use as claimed in claim 1, wherein the dried plant is used in finely divided form.

5. Use as claimed in claim 1, wherein the dried leaves of the plant are used in finely divided form.

6. A method for controlling fungi in agriculture, wherein the fungi or those parts of the plant which are to be protected from fungal attack are treated with a fungicidal amount of the plant Reynoutria sachalinensis.

7. A fungicide for agriculture, containing the dried leaves of the plant Reynoutria sachalinensis in finely divided form.

8. A spray liquor containing water and the dried leaves of the plant Reynoutria sachalinensis in finely divided form.

## Revendications

1. Utilisation de la plante Reynoutria sachalinensis pour la lutte contre les champignons en agriculture.

2. Agent fongicide pour l'agriculture, contenant la plante Reynoutria sachalinensis un support solide inerte et agent tensio-actif.

3. Utilisation selon la revendication 1, caractérisée par le fait qu'on utilise la plante séchée.

4. Utilisation selon la revendication 1, caractérisée par le fait qu'on utilise la plante séchée sous forme finement divisée.

5. Utilisation selon la revendication 1, caractérisée par le fait qu'on utilise les feuilles séchées de la plante sous forme finement divisée.

6. Procédé de lutte contre les champignons en agriculture, caractérisée par le fait qu'on traite les champignons ou les parties de plantes à protéger avec une quantité efficace du point de vue fongicide de la plante Reynoutria sachalinensis.

7. Agent fongicide pour l'agriculture, contenant les feuilles séchées de la plante Reynoutria sachalinensis sous forme finement divisée.

8. Bouillie de pulvérisation, contenant de l'eau et les feuilles séchées de la plante Reynoutria sachalinensis sous forme finement divisée.